# EUROPEAN PATENT APPLICATION

(11) **EP 4 394 219 A1**
(43) Date of publication of application: **03.07.2024**
(21) Application number: 21960545.8
(22) Date of filing: 11.10.2021
(51) Int. Cl.: F16K 1/36, F02M 59/36

(54) **ELECTROMAGNETIC SUCTION VALVE AND FUEL SUPPLY PUMP**

(71) Applicant: Hitachi Astemo, Ltd., Ibaraki 312-8503 (JP)
(72) Inventor: KAWANO Tatsuo, Hitachinaka-shi, Ibaraki 312-8503 (JP); HASHIDA Minoru, Hitachinaka-shi, Ibaraki 312-8503 (JP); USUI Satoshi, Hitachinaka-shi, Ibaraki 312-8503 (JP); SAITO Atsuji, Hitachinaka-shi, Ibaraki 312-8503 (JP); ITO Takafumi, Hitachinaka-shi, Ibaraki 312-8503 (JP)
(74) Representative: Manitz Finsterwald Patent- und Rechtsanwaltspartnerschaft mbB
(86) International application number: PCT/JP2021/037581
(87) International publication number: WO 2023/062684

(57) **Abstract**

The purpose of the present invention is to prevent a suction valve from closing due to fluid force when an electromagnetic coil is in an unenergized state. This electromagnetic suction valve comprises: a valve part that is in an open state when not energized and opens/closes a fuel introduction opening; and a stopper that has a bottom section that abuts the valve part in an open state in which the valve part has opened the fuel introduction opening, and a side wall section that faces a side circumferential surface of the valve part. The bottom section of the stopper has a plurality of fuel passage holes. In the direction that the bottom section of the stopper and the valve section face each other, the area of a portion in each of the plurality of fuel passage holes that does not overlap the valve part is greater than the area of a portion that overlaps the valve part.

## Description

### Technical Field

The present invention relates to an electromagnetic suction valve and a fuel supply pump.

### Background Art

A high-pressure fuel supply pump is described in, for example, Patent Literature 1. The high-pressure fuel supply pump described in Patent Literature 1 includes an electromagnetic suction valve. In the electromagnetic suction valve, in a case where an electromagnetic coil is in an unenergized state which is not energized, a valve body is biased by a biasing force of a spring and enters an open state. On the other hand, when the electromagnetic coil is energized, a magnetic attractive force is generated, and thus the valve body moves against the biasing force of the spring, and the electromagnetic suction valve enters a close state. As described above, the electromagnetic suction valve performs an opening/closing motion depending on whether or not the electromagnetic coil is energized, and controls the supply amount of high-pressure fuel.

### Citation List

### Patent Literature

Patent Literature 1: JP 2012-251658 A

### Summary of Invention

### Technical Problem

However, in the electromagnetic suction valve of the high-pressure fuel supply pump described in Patent Literature 1, when the electromagnetic coil is in the unenergized state, the electromagnetic suction valve may be closed by a fluid force of the fuel flowing back from a pressurizing chamber side. As a result, even when the electromagnetic suction valve is opened so that the fuel is not discharged from the pump, the fuel is discharged from the pump. As a result, there is a problem that the discharge amount of the pump cannot be controlled.

In consideration of the above-described problem, an object of the invention is to provide an electromagnetic suction valve and a fuel supply pump capable of preventing the valve from being closed by a fluid force of fuel when an electromagnetic coil is in an unenergized state.

### Solution to Problem

In order to solve the above-described problem and achieve the object, an electromagnetic suction valve includes: a valve part that is in an open state when not energized and opens and closes a fuel introduction opening; and a stopper including a bottom section that comes into contact with the valve part in the open state in which the valve part has opened the fuel introduction opening, and a side wall section facing a side circumferential surface of the valve part. The bottom section of the stopper includes a plurality of fuel passage holes. In the direction that the bottom section of the stopper and the valve section face each other, the area of a portion in each of the plurality of fuel passage holes that does not overlap the valve part is greater than the area of a portion that overlaps the valve part.

In addition, the fuel supply pump of the invention includes a body including a pressurizing chamber, a plunger that is supported to the body so as to be able to reciprocate and increases or decreases a capacity of the pressurizing chamber by the reciprocating motion, and the electromagnetic valve mechanism that discharges fuel to the pressurizing chamber.

### Advantage Effects of Invention

According to the electromagnetic suction valve having the above-described configuration, it is possible to prevent the valve from being closed by a fluid force of fuel when the electromagnetic coil is in the unenergized state.

Note that, problems, configurations, and effects other than those described above will be clarified by the following description of embodiments.

### Brief Description of Drawings

Fig. 1 is an overall configuration diagram of a fuel supply system using a high-pressure fuel supply pump according to a first embodiment of the invention.
Fig. 2 is a longitudinal cross-sectional view (Part 1) of the high-pressure fuel supply pump according to the first embodiment of the invention.
Fig. 3 is a longitudinal cross-sectional view (Part 2) of the high-pressure fuel supply pump according to the first embodiment of the invention.
Fig. 4 is a horizontal cross-sectional view of the high-pressure fuel supply pump according to the first embodiment of the invention as viewed from above.
Fig. 5 is an exploded cross-sectional view of an electromagnetic suction valve in the high-pressure fuel supply pump according to the first embodiment of the invention.
Fig. 6 is an enlarged cross-sectional view of an electromagnetic suction valve in the high-pressure fuel supply pump according to the first embodiment of the invention, and is a cross-sectional view illustrating a state in which the electromagnetic suction valve is opened.
Fig. 7 is an enlarged cross-sectional view of the electromagnetic suction valve in the high-pressure fuel supply pump according to the first embodiment of the invention, and is a cross-sectional view illustrating a state in which the electromagnetic suction valve is closed.
Fig. 8 is a view when the electromagnetic suction valve in the high-pressure fuel supply pump according to the first embodiment of the invention is viewed from the pressurizing chamber side in an opening and closing direction.
Fig. 9 is a view when an electromagnetic suction valve in a high-pressure fuel supply pump according to a second embodiment of the invention is viewed from the pressurizing chamber side in an opening and closing direction.

### Description of Embodiments

### 1. First Embodiment

Hereinafter, a high-pressure fuel supply pump according to a first embodiment of the invention will be described. Note that, in the drawings, the same members are denoted by the same reference numerals.

### [Fuel Supply System]

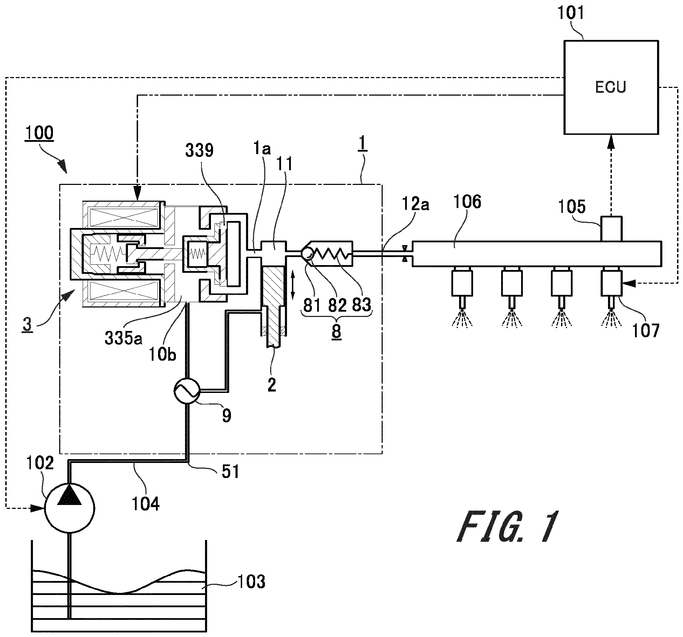

First, a fuel supply system using a high-pressure fuel supply pump according to this embodiment will be described with reference to Fig. 1.

Fig. 1 is an overall configuration diagram of the fuel supply system using the high-pressure fuel supply pump according to this embodiment of the invention.

As illustrated in Fig. 1, the fuel supply system includes a high-pressure fuel supply pump 100, an engine control unit (ECU) 101, a fuel tank 103, a common rail 106, and a plurality of injectors 107. The components of the high-pressure fuel supply pump 100 are integrally incorporated in the body 1.

The fuel in the fuel tank 103 is pumped up by a feed pump 102 that is driven based on a signal from the ECU 101. The pumped fuel is pressurized to an appropriate pressure by a pressure regulator (not illustrated) and sent to a low-pressure fuel suction port 51 of the high-pressure fuel supply pump 100 through a low-pressure pipe 104.

The high-pressure fuel supply pump 100 pressurizes the fuel supplied from the fuel tank 103 and pressure-feeds the fuel to the common rail 106. The plurality of injectors 107 and a fuel pressure sensor 105 are mounted on the common rail 106. The plurality of injectors 107 are mounted in accordance with the number of cylinders (combustion chambers), and inject the fuel according to a drive current output from the ECU 101. The fuel supply system of this embodiment is a so-called direct injection engine system in which each of the injectors 107 directly injects the fuel into each of cylinders of the engine.

The fuel pressure sensor 105 outputs detected pressure data to the ECU 101. The ECU 101 calculates an appropriate fuel injection amount (target fuel injection amount), an appropriate fuel pressure (target fuel pressure), and the like on the basis of engine state quantities (for example, a crank rotation angle, a throttle opening, an engine speed, a fuel pressure, and the like) obtained from various sensors.

In addition, the ECU 101 controls driving of the high-pressure fuel supply pump 100 and the plurality of injectors 107 on the basis of a calculation result of the fuel pressure (target fuel pressure) and the like. That is, the ECU 101 includes a pump control unit that controls the high-pressure fuel supply pump 100 and an injector control unit that controls each of the injectors 107.

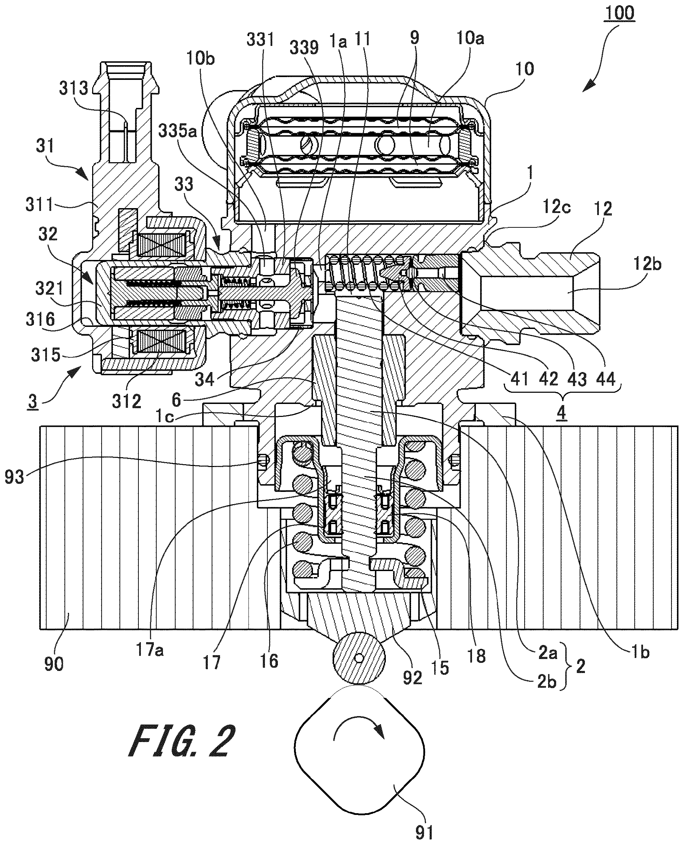

The high-pressure fuel supply pump 100 includes a pressure pulsation reduction mechanism 9, an electromagnetic suction valve 3 which is a variable capacity mechanism, a relief valve mechanism 4 (refer to Fig. 2), and a discharge valve 8. The fuel flowing from the low-pressure fuel suction port 51 reaches a suction port 335a of the electromagnetic suction valve 3 via the pressure pulsation reduction mechanism 9 and a suction passage 10b.

The fuel flowing into the electromagnetic suction valve 3 passes through the valve part 339, flows through a suction passage 1a formed in the body 1, and then flows into a pressurizing chamber 11. A plunger 2 is slidably held in the pressurizing chamber 11. The plunger 2 reciprocates when power is transmitted by a cam 91 (refer to Fig. 2) of the engine.

In the pressurizing chamber 11, fuel is suctioned from the electromagnetic suction valve 3 in a down-stroke of the plunger 2, and the fuel is pressurized in an up-stroke. When the fuel pressure in the pressurizing chamber 11 exceeds a set value, the discharge valve 8 is opened, and the high-pressure fuel is pressure-fed to the common rail 106 via a discharge passage 12a. The fuel discharge by the high-pressure fuel supply pump 100 is operated by opening and closing the electromagnetic suction valve 3. The opening and closing of the electromagnetic suction valve 3 is controlled by the ECU 101.

### [High-Pressure Fuel Supply Pump]

Next, a configuration of the high-pressure fuel supply pump 100 will be described with reference to Figs. 2 to 4.

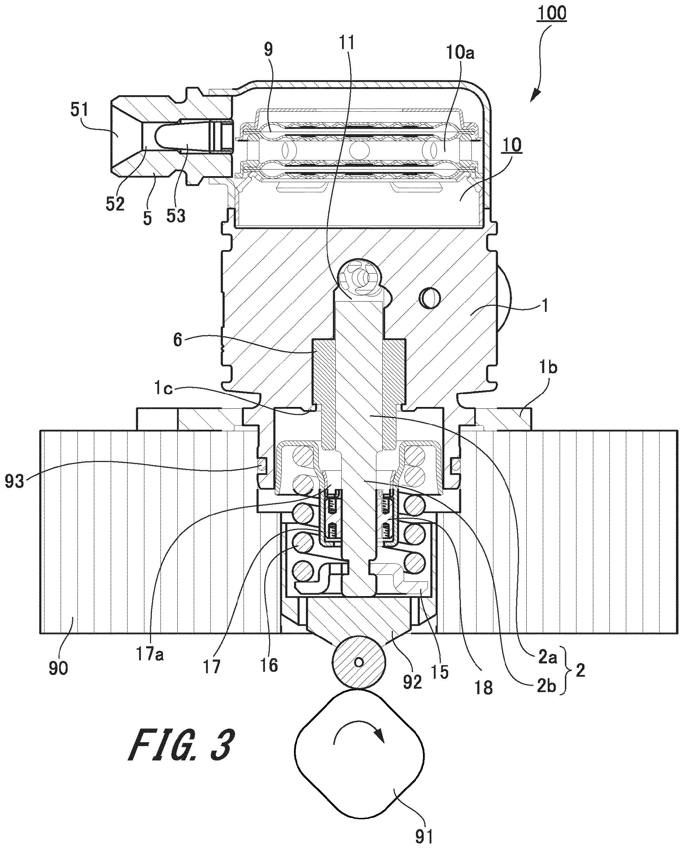

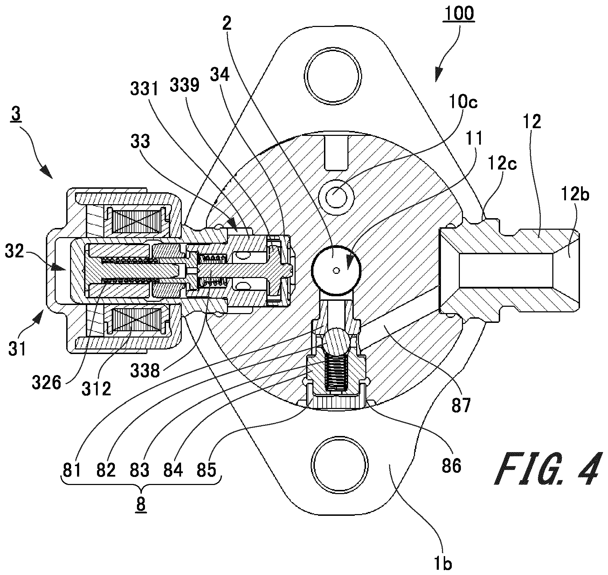

Fig. 2 is a longitudinal cross-sectional view (Part 1) of the high-pressure fuel supply pump 100 as viewed in a cross-section orthogonal to the horizontal direction, and Fig. 3 is a longitudinal cross-sectional view (Part 2) of the high-pressure fuel supply pump 100 as viewed in a cross-section orthogonal to the horizontal direction. In addition, Fig. 4 is a horizontal cross-sectional view of the high-pressure fuel supply pump 100 as viewed in a cross-section orthogonal to the vertical direction.

As illustrated in Figs. 2 to 4, the body 1 of the high-pressure fuel supply pump 100 is provided with the above-described suction passage 1a and a mounting flange 1b. The mounting flange 1b is in close contact with a fuel pump mounting portion 90 of an engine (internal combustion engine) and is fixed by a plurality of bolts (screws) (not illustrated). That is, the high-pressure fuel supply pump 100 is fixed to the fuel pump mounting portion 90 by the mounting flange 1b.

As shown in Fig. 2, an O-ring 93 showing a specific example of a seat member is interposed between the fuel pump mounting portion 90 and the body 1. The O-ring 93 prevents engine oil from leaking to the outside of the engine (internal combustion engine) through between the fuel pump mounting portion 90 and the body 1.

In addition, a cylinder 6 that guides the reciprocating motion of the plunger 2 is attached to the body 1 of the high-pressure fuel supply pump 100. The cylinder 6 is formed in a tubular shape, and is press-fitted into the body 1 on an outer peripheral side thereof. The body 1 and the cylinder 6 form a pressurizing chamber 11 in combination with the electromagnetic suction valve 3, the plunger 2, and the discharge valve 8 (refer to Fig. 4).

The body 1 is provided with a fixing portion 1c that engages with a central portion of the cylinder 6 in the axial direction. The fixing portion 1c of the body 1 presses the cylinder 6 upward (upward side in Fig. 2). This prevents fuel pressurized in the pressurizing chamber 11 from leaking from between the upper end surface of the cylinder 6 and the body 1.

A tappet 92 is provided at a lower end of the plunger 2. The tappet 92 converts rotational motion of a cam 91 attached to a cam shaft of the engine into vertical motion and transfers the vertical motion to the plunger 2. The plunger 2 is biased to the cam 91 side by a spring 16 via a retainer 15. Thus, the plunger 2 is brought into press-contact with the tappet 92. The tappet 92 reciprocates in accordance with the rotation of the cam 91. The plunger 2 reciprocates together with the tappet 92 to change the volume of the pressurizing chamber 11.

In addition, a seal holder 17 is disposed between the cylinder 6 and the retainer 15. The seal holder 17 is formed in a tubular shape into which the plunger 2 is inserted, and includes an auxiliary chamber 17a at an upper end on the cylinder 6 side. In addition, the seal holder 17 holds a plunger seal 18 at a lower end on the retainer 15 side.

The plunger seal 18 is slidably in contact with the outer periphery of the plunger 2. When the plunger 2 reciprocates, the plunger seal 18 seals the fuel in the auxiliary chamber 17a so that the fuel in the auxiliary chamber 17a does not flow into the engine. In addition, the plunger seal 18 prevents lubricating oil (including engine oil) that lubricates a sliding portion in the engine from flowing into the body 1.

In Fig. 2, the plunger 2 reciprocates in the vertical direction. When the plunger 2 descends, the volume of the pressurizing chamber 11 increases, and when the plunger 2 ascends, the volume of the pressurizing chamber 11 decreases. That is, the plunger 2 is disposed to reciprocate in a direction of enlarging and reducing the volume of the pressurizing chamber 11.

The plunger 2 includes a large-diameter portion 2a and a small-diameter portion 2b. When the plunger 2 reciprocates, the large-diameter portion 2a and the small-diameter portion 2b are located in the auxiliary chamber 17a. Therefore, the volume of the auxiliary chamber 17a increases or decreases by the reciprocation of the plunger 2.

The auxiliary chamber 17a communicates with the low-pressure fuel chamber 10 through a fuel passage 10c (refer to Fig. 4). When the plunger 2 descends, fuel flows from the auxiliary chamber 17a to the low-pressure fuel chamber 10. When the plunger 2 ascends, fuel flows from the low-pressure fuel chamber 10 to the auxiliary chamber 17a. As a result, the fuel flow rate into and out of the pump during the suction stroke or the return stroke of the high-pressure fuel supply pump 100 can be reduced. As a result, the pressure pulsation generated in the high-pressure fuel supply pump 100 can be reduced.

The body 1 is provided with the relief valve mechanism 4 communicating with the pressurizing chamber 11. The relief valve mechanism 4 is opened when some problem occurs in the common rail 106 or a member in front of the common rail, and the common rail 106 has a high pressure exceeding a predetermined pressure. As a result, the fuel in the discharge passage 12a returns to the pressurizing chamber 11.

The relief valve mechanism 4 includes a relief spring 41, a relief valve holder 42, a relief valve 43, and a seat member 44. One end portion of the relief spring 41 is in contact with the body 1, and the other end portion is in contact with the relief valve holder 42. The relief valve holder 42 engages with the relief valve 43. The biasing force of the relief spring 41 acts on the relief valve 43 via the relief valve holder 42.

The relief valve 43 is pressed by the biasing force of the relief spring 41. According to this, the fuel passage of the seat member 44 is closed. The fuel passage of the seat member 44 communicates with the discharge passage 12a. Movement of fuel between the pressurizing chamber 11 (upstream side) and the seat member 44 (downstream side) is blocked by contact (close contact) of the relief valve 43 with the seat member 44.

When the pressure of the fuel in the common rail 106 or a member in front of the common rail increases, the fuel on the seat member 44 side presses the relief valve 43. As a result, the relief valve 43 moves against the biasing force of the relief spring 41. As a result, the relief valve 43 is opened, and the fuel in the discharge passage 12a returns to the pressurizing chamber 11 through the fuel passage of the seat member 44. Therefore, the pressure for opening the relief valve 43 is determined by the biasing force of the relief spring 41.

The relief valve mechanism 4 of this embodiment communicates with the pressurizing chamber 11, but is not limited thereto. For example, the relief valve mechanism 4 may communicate with a low-pressure passage (the low-pressure fuel suction port 51, the suction passage 10b, or the like).

As illustrated in Fig. 3, the body 1 of the high-pressure fuel supply pump 100 is provided with a low-pressure fuel chamber 10. A suction joint 5 is attached to a side surface portion of the low-pressure fuel chamber 10. The suction joint 5 is connected to the low-pressure pipe 104 through which the fuel supplied from the fuel tank 103 passes. The fuel in the fuel tank 103 is supplied from the suction joint 5 to the inside of the high-pressure fuel supply pump 100.

The suction joint 5 includes the low-pressure fuel suction port 51 connected to the low-pressure pipe 104 and a suction flow path 52 communicating with the low-pressure fuel suction port 51. A suction filter 53 is disposed in the suction flow path 52. The suction filter 53 removes foreign substances present in the fuel and prevents foreign substances from entering the high-pressure fuel supply pump 100. The fuel that has passed through the suction flow path 52 reaches the suction port 335a (refer to Fig. 2) of the electromagnetic suction valve 3 via the pressure pulsation reduction mechanism 9 and the suction passage 10b (refer to Fig. 2) provided in the low-pressure fuel chamber 10.

As illustrated in Fig. 2, the low-pressure fuel chamber 10 is provided with a low-pressure fuel flow path 10a and the suction passage 10b. The suction passage 10b communicates with the suction port 335a of the electromagnetic suction valve 3. The fuel that has passed through the low-pressure fuel flow path 10a reaches the suction port 335a of the electromagnetic suction valve 3 via the suction passage 10b.

The pressure pulsation reduction mechanism 9 is provided in the low-pressure fuel flow path 10a. When the fuel flowing into the pressurizing chamber 11 is returned to the suction passage 10b through the electromagnetic suction valve 3 in the open state again, pressure pulsation occurs in the low-pressure fuel chamber 10. The pressure pulsation reduction mechanism 9 reduces spreading of the pressure pulsation generated in the high-pressure fuel supply pump 100 to the low-pressure pipe 104.

The pressure pulsation reduction mechanism 9 includes a metal diaphragm damper obtained by laminating and bonding two corrugated disk-shaped metal plates at the outer periphery thereof. An inert gas such as argon is injected into the metal diaphragm damper. The metal diaphragm damper expands and contracts to absorb or reduce pressure pulsation.

As illustrated in Fig. 4, the discharge valve 8 is connected to an outlet side of the pressurizing chamber 11. The discharge valve 8 includes a discharge valve seat 81 communicating with the pressurizing chamber 11, a valve body 82 that comes into contact with and separates from the discharge valve seat 81, a discharge valve spring 83 that biases the valve body 82 toward the discharge valve seat 81, and a discharge valve stopper 84 that determines a stroke (moving distance) of the valve body 82.

In addition, the discharge valve 8 includes a plug 85 that blocks leakage of fuel to the outside. The discharge valve stopper 84 is press-fitted into the plug 85. The plug 85 is joined to the body 1 by welding at a welding portion 86. The discharge valve 8 communicates with a discharge valve chamber passage 87 that is opened and closed by the valve body 82. The discharge valve chamber passage 87 is formed in the body 1 and communicates with a fuel discharge port 12b through a horizontal hole that is formed in the body 1 and extends in the horizontal direction.

A discharge joint 12 is inserted into horizontal hole formed in the body 1. The discharge joint 12 includes the discharge passage 12a communicating with the horizontal hole and the fuel discharge port 12b that is one end of the discharge passage 12a. The fuel discharge port 12b of the discharge joint 12 communicates with the common rail 106. Note that, the discharge joint 12 is fixed to the body 1 by welding by a welding portion 12c.

In a state where there is no difference in fuel pressure (fuel differential pressure) between the pressurizing chamber 11 and the discharge valve chamber passage 87, the valve body 82 is pressed against the discharge valve seat 81 by the biasing force of the discharge valve spring 83. As a result, the discharge valve 8 is closed. When the fuel pressure in the pressurizing chamber 11 becomes larger than the fuel pressure in the discharge valve chamber passage 87, the valve body 82 moves against the biasing force of the discharge valve spring 83. As a result, the discharge valve 8 enters an open state.

When the discharge valve 8 enters a close state, the (high-pressure) fuel in the pressurizing chamber 11 passes through the discharge valve 8 and reaches the discharge valve chamber passage 87. Then, the fuel that has reached the discharge valve chamber passage 87 is discharged to the common rail 106 (refer to Fig. 1) via the fuel discharge port 12b of the discharge joint 12. According to the above-described configuration, the discharge valve 8 functions as a check valve that restricts a flowing direction of the fuel.

### [Electromagnetic Suction Valve]

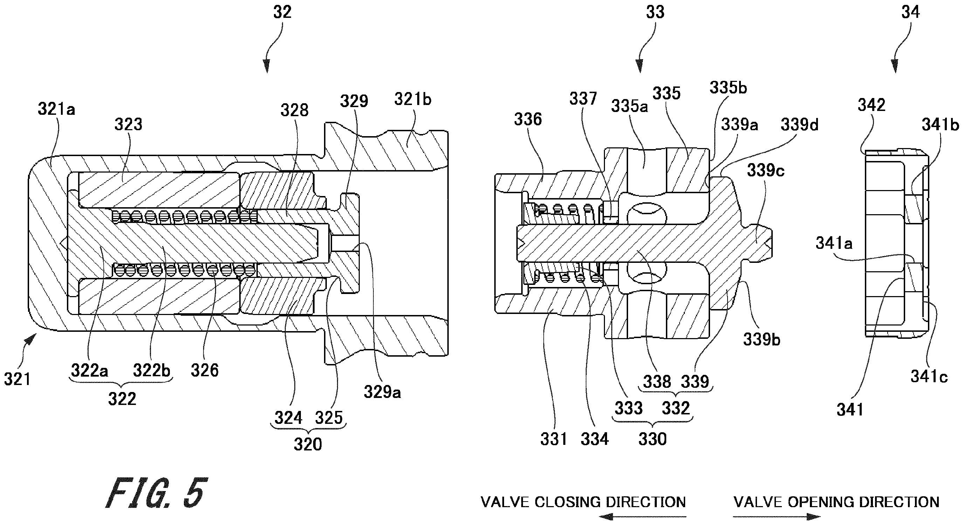

Next, a configuration of the electromagnetic suction valve 3 will be described with reference to Figs. 2 and 5.

Fig. 5 is an exploded cross-sectional view of an electromagnetic suction valve in the high-pressure fuel supply pump 100.

As illustrated in Fig. 2, the electromagnetic suction valve 3 includes a coil unit 31, an anchor unit 32, a valve body unit 33, and a stopper 34.

### (Coil Unit)

The coil unit 31 includes a base member 311 fitted to the anchor unit 32, an electromagnetic coil 312 fixed to the base member 311, and a terminal member 313 connected to the electromagnetic coil 312.

The base member 311 is formed from a resin material or the like. A bobbin 315 is joined to the base member 311. The bobbin 315 and the base member 311 form a fitting hole 316 into which a housing 321 (described later) of the anchor unit 32 is fitted. The electromagnetic coil 312 is wound around the bobbin 315. The electromagnetic coil 312 is disposed so as to go around the anchor unit 32 fitted into the fitting hole 316.

A portion of the terminal member 313 is embedded in the base member 311. A portion of the terminal member 313 is electrically connected to the electromagnetic coil 312. On the other hand, the other portion of the terminal member 313 is exposed to the outside. The other part of the terminal member 313 enables connection between the terminal member 313 and the outside (power supply). That is, a current flows through the electromagnetic coil 312 via the terminal member 313.

### (Anchor Unit)

As illustrated in Fig. 5, the anchor unit 32 includes a housing 321, an anchor guide 322, a magnetic core 323, an anchor 324, an anchor sleeve 325, and an anchor sleeve biasing spring 326.

The housing 321 is formed in a bottomed cylindrical shape. The housing 321 includes a housing main body 321a and a joining convex portion 321b provided on an outer peripheral portion on an opening side of the housing main body 321a. The joining convex portion 321b is continuous in the circumferential direction of the housing main body 321a. The joining convex portion 321b is fitted into a fitting hole provided in the body 1 (refer to Fig. 2). In addition, the coil unit 31 comes into contact with an end surface of the joining convex portion 321b which faces the bottom section side of the housing main body 321a.

The anchor guide 322 is disposed in the housing main body 321a. The anchor guide 322 is formed in an approximately columnar shape. The anchor guide 322 includes a large-diameter portion 322a fixed to the bottom section of the housing main body 321a and a small-diameter portion 322b that is continuous with the large-diameter portion 322a and has a diameter smaller than that of the large-diameter portion 322a.

The magnetic core 323 is disposed in the housing main body 321a. The magnetic core 323 is formed in a cylindrical shape, and an outer peripheral portion thereof is in contact with an inner peripheral portion of the housing main body 321a. In addition, the large-diameter portion 322a of the anchor guide 322 is fitted to one end portion of the magnetic core 323 in the axial direction (an end portion on the bottom section side of the housing main body 321a). An inner peripheral portion excluding one end portion of the magnetic core 323 faces an outer peripheral portion of the small-diameter portion 322b of the anchor guide 322 at a predetermined distance. The other end of the magnetic core 323 in the axial direction faces the anchor 324.

The anchor 324 and the anchor sleeve 325 are an integrally assembled movable portion 320. The movable portion 320 is movably disposed in the housing main body 321a. The anchor 324 is formed in a cylindrical shape. An outer peripheral portion of the anchor 324 slidably engages with an inner peripheral portion of the housing main body 321a. One end of the anchor 324 in an axial direction faces the other end of the magnetic core 323.

The anchor sleeve 325 includes a fixed cylindrical portion 328 press-fitted and fixed to the inner peripheral portion of the anchor 324, and a contact portion 329 continuous with the fixed cylindrical portion 328. The inner peripheral portion of the fixed cylindrical portion 328 slidably engages with the outer peripheral portion of the small-diameter portion 322b of the anchor guide 322. One end of the fixed cylindrical portion 328 is disposed inside the anchor 324. The contact portion 329 is continuous with the other end of the fixed cylindrical portion 328 in the axial direction. The contact portion 329 is formed in a disk shape having an outer diameter larger than the outer diameter of the fixed cylindrical portion 328. A through-hole 329a communicating with a cylindrical hole of the fixed cylindrical portion 328 is formed in the contact portion 329.

The anchor sleeve biasing spring 326 is fitted between the outer peripheral portion of the small-diameter portion 322b of the anchor guide 322 and the inner peripheral portion of the magnetic core 323. One end of the anchor sleeve biasing spring 326 is in contact with the large-diameter portion 322a of the anchor guide 322. The other end of the anchor sleeve biasing spring 326 is in contact with the fixed cylindrical portion 328 of the anchor sleeve 325.

The anchor sleeve biasing spring 326 biases the movable portion 320 in a direction away from the magnetic core 323. Therefore, when no magnetic attraction force acts between the anchor 324 and the magnetic core 323, a clearance is generated between the anchor 324 and the magnetic core 323. On the other hand, when the magnetic attraction force acts between the anchor 324 and the magnetic core 323, the movable portion 320 moves against the biasing force of the anchor sleeve biasing spring 326. As a result, the anchor 324 of the movable portion 320 comes into contact with the magnetic core 323.

When the movable portion 320 moves in a direction away from the magnetic core 323, a valve member 332 of the valve body unit 33 to be described later is pressed. As a result, the valve part 339 of the valve member 332 is separated from a suction valve seat 331 to be described later and opens the fuel introduction opening. As a result, the electromagnetic suction valve 3 enters the open state. Hereinafter, a direction in which the movable portion 320 moves away from the magnetic core 323 is defined as a valve opening direction. That is, the anchor sleeve biasing spring 326 biases the movable portion 320 in the valve opening direction.

### (Valve Body Unit)

The valve body unit 33 includes the suction valve seat 331, a valve member 332, a spring holder 333, and a suction valve biasing spring 334. The suction valve seat 331 is formed in an approximately cylindrical shape. The suction valve seat 331 includes a large-diameter seat portion 335 and a small-diameter seat portion 336 continuous with the large-diameter seat portion 335. The large-diameter seat portion 335 is press-fitted and fixed to the body 1. The small-diameter seat portion 336 is press-fitted and fixed to the inner peripheral side of the housing 321 (housing main body 321a) of the anchor unit 32.

A suction port 335a that reaches the inner peripheral portion from the outer peripheral portion is formed in the large-diameter seat portion 335. The suction port 335a communicates with the suction passage 10b (refer to Fig. 2) in the low-pressure fuel chamber 10 described above. In addition, an end surface of the large-diameter seat portion 335 on a side opposite to the small-diameter seat portion 336 is a seating surface 335b on which a valve part 339 of the valve member 332 to be described later is seated. The seating surface 335b is formed in a plane orthogonal to the axial direction of the large-diameter seat portion 335.

Furthermore, an inner peripheral guide portion 337 is provided on an inner peripheral portion of the large-diameter seat portion 335. The inner peripheral guide portion 337 is formed in a disk shape having a plane orthogonal to the axial direction of the large-diameter seat portion 335. The inner peripheral guide portion 337 includes a through-hole through which a rod portion 338 of the valve member 332 to be described later passes. The inner peripheral guide portion 337 slidably holds the rod portion 338 of the valve member 332.

The valve member 332 includes the rod portion 338 formed in a columnar shape and the valve part 339 connected to one end portion of the rod portion 338 in the axial direction. The rod portion 338 is disposed inside the suction valve seat 331. An intermediate portion of the rod portion 338 is slidably held by the inner peripheral guide portion 337 of the suction valve seat 331. In addition, the contact portion 329 of the anchor sleeve 325 engages with the other end portion of the rod portion 338 in the axial direction in the suction valve seat 331. The valve part 339 faces the seating surface 335b of the suction valve seat 331.

The valve part 339 is formed in a disk shape having a diameter larger than the diameter of the inner peripheral portion of the large-diameter seat portion 335. The valve part 339 includes a valve part seat surface 339a and a contact surface 339b. The valve part seat surface 339a faces the seating surface 335b of the suction valve seat 331. The contact surface 339b is a surface opposite to the valve part seat surface 339a.

The valve part seat surface 339a is formed in a plane orthogonal to the valve opening direction (valve closing direction). In the close state of the electromagnetic suction valve 3, the valve part seat surface 339a comes into contact with the seating surface 335b of the suction valve seat 331. That is, when the valve part seat surface 339a comes into contact with the seating surface 335b of the suction valve seat 331, the valve part 339 is seated on the seating surface 335b of the suction valve seat 331.

The contact surface 339b of the valve part 339 is formed in a tapered shape that is convex toward the central portion. The contact surface 339b comes into contact with a bottom section 341, which will be described later, of the stopper 34 in the open state of the electromagnetic suction valve 3. Further, the contact surface 339b is provided with an engagement protrusion 339c that engages with an engagement hole 341a of the stopper 34 to be described later.

The spring holder 333 is formed in a cylindrical shape. The spring holder 333 includes a flange with which one end of the suction valve biasing spring 334 comes into contact. The spring holder 333 is press-fitted and fixed to an end portion of the rod portion 338 on a side opposite to the valve part 339 side. That is, the spring holder 333 is integrally assembled with the valve member 332. The valve member 332 and the spring holder 333 constitute the movable portion 330.

A length from a guide portion center, which is the center of the inner peripheral guide portion 337 in a direction in which the rod portion 338 extends (a direction parallel to the valve closing direction and the valve opening direction), to the other end portion of the rod portion 338 is shorter than a length from the guide portion center to the tip end of the engagement protrusion 339c of the valve part 339. The length from the guide portion center to the other end of the rod portion 338 can be set regardless of the size of the suction valve seat 331. By shortening the length from the guide portion center to the other end portion of the rod portion 338, the movable portion 330 can be downsized (reduced). As a result, the responsiveness of the movable portion 330 can be improved.

The suction valve biasing spring 334 is disposed upstream of the inner peripheral guide portion 337 (opposite to the pressurizing chamber 11). The suction valve biasing spring 334 is fitted between the inner peripheral portion of the small-diameter seat portion 336 of the suction valve seat 331 and the outer peripheral portion of the spring holder 333. One end of the suction valve biasing spring 334 is in contact with the flange of the spring holder 333. The other end of the suction valve biasing spring 334 is in contact with the inner peripheral guide portion 337 of the suction valve seat 331.

The suction valve biasing spring 334 biases the valve member 332 in a direction in which the valve part 339 approaches the seating surface 335b of the suction valve seat 331. Hereinafter, a direction in which the valve part 339 approaches the seating surface 335b of the suction valve seat 331 is defined as a valve closing direction. That is, the suction valve biasing spring 334 biases the valve member 332 (movable portion 330) in the valve closing direction.

The biasing force of the suction valve biasing spring 334 is set to be smaller than the biasing force of the anchor sleeve biasing spring 326. Therefore, when no magnetic attractive force acts between the anchor 324 and the magnetic core 323 in the anchor unit 32, the movable portion 320 and the movable portion 330 are biased in the valve opening direction by the anchor sleeve biasing spring 326. As a result, the valve part seat surface 339a of the valve part 339 is separated from the seating surface 335b of the suction valve seat 331 to open the fuel introduction opening. As a result, the electromagnetic suction valve 3 enters the open state.

### (Stopper)

The stopper 34 is fixed to the body 1 (refer to Fig. 2). The stopper 34 is formed in a bottomed cylindrical shape with the valve member 332 side opened. Accordingly, the stopper 34 includes the bottom section 341. An inner diameter of the stopper 34 is set to be larger than an outer diameter of the valve part 339. The bottom section 341 of the stopper 34 restricts movement of the movable portion 330 (valve member 332) in the valve opening direction by the contact with the valve part 339.

The engagement hole 341a and a plurality of fuel passage holes 341b are formed in the bottom section 341 of the stopper 34. The engagement hole 341a is provided in a central portion of the bottom section 341. The plurality of fuel passage holes 341b are arranged with intervals applied to the periphery of the engagement hole 341a. In the open state of the electromagnetic suction valve 3, the engagement protrusion 339c of the valve part 339 engages with the engagement hole 341a of the stopper 34, and the contact surface 339b of the valve part 339 comes into contact with the bottom section 341 of the stopper 34. Therefore, a valve opening stroke (a stroke from the close state to the open state) of the valve member 332 is defined by the stopper 34.

### [Operation of High-Pressure Fuel Pump]

Next, the operation of the high-pressure fuel pump according to this embodiment will be described with reference to Figs. 2, 6, and 7.

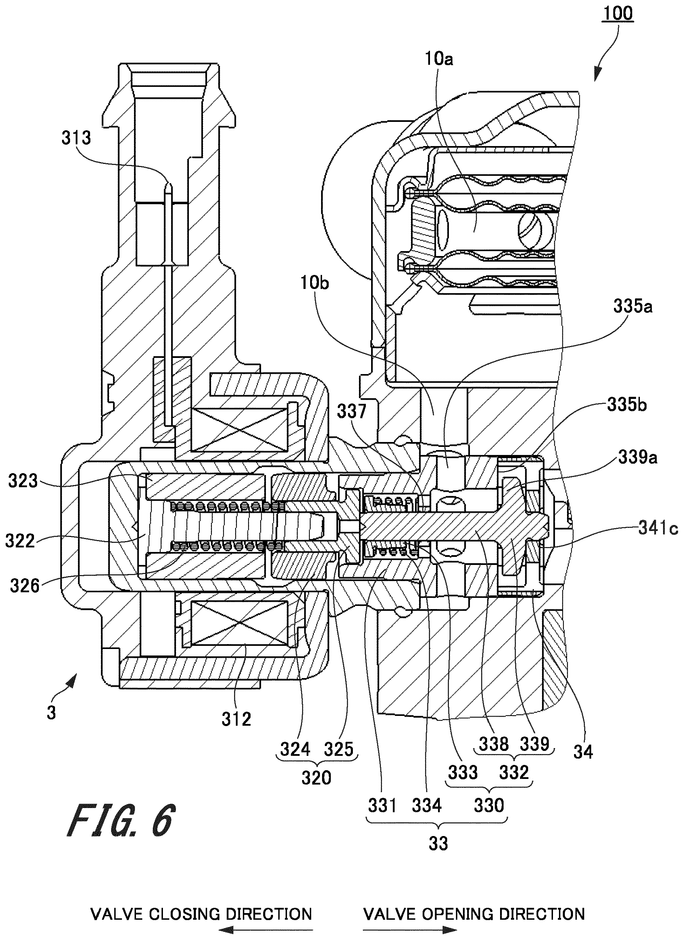

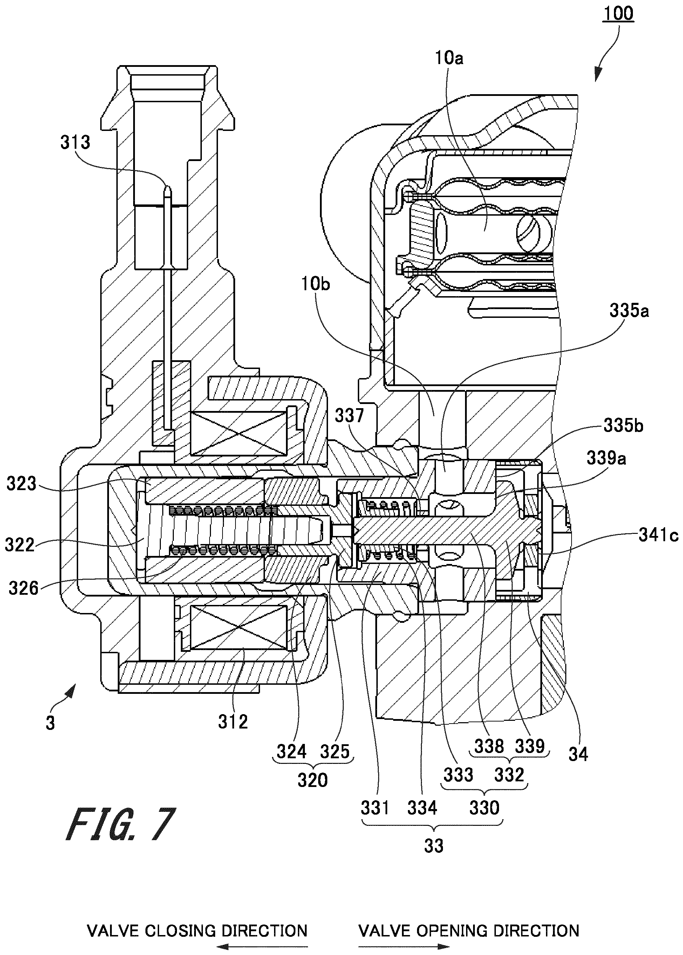

Fig. 6 is a cross-sectional view illustrating a state in which the electromagnetic suction valve 3 in the high-pressure fuel supply pump 100 is closed. Fig. 7 is a cross-sectional view illustrating a state in which the electromagnetic suction valve 3 in the high-pressure fuel supply pump 100 is closed.

In Fig. 2, in a case where the plunger 2 descends, when the electromagnetic suction valve 3 is opened, the fuel flows from the suction passage 1a into the pressurizing chamber 11. Hereinafter, a stroke in which the plunger 2 descends is referred to as a suction stroke. On the other hand, in a case where the plunger 2 ascends, when the electromagnetic suction valve 3 is closed, the fuel in the pressurizing chamber 11 is pressurized. As a result, the fuel in the pressurizing chamber 11 passes through the discharge valve 8 and is pressure-fed to the common rail 106 (refer to Fig. 1). Hereinafter, the process in which the plunger 2 ascends is referred to as an ascending process.

As described above, when the electromagnetic suction valve 3 is closed during a compression stroke, the fuel suctioned into the pressurizing chamber 11 during the suction stroke is pressurized and discharged to the common rail 106 side. On the other hand, when the electromagnetic suction valve 3 is opened during the compression stroke, the fuel in the pressurizing chamber 11 is pushed back toward the suction passage 1a and is not discharged toward the common rail 106. As described above, the fuel discharge by the high-pressure fuel supply pump 100 is operated by opening and closing the electromagnetic suction valve 3. The opening and closing of the electromagnetic suction valve 3 is controlled by the ECU 101.

In the suction stroke, the volume of the pressurizing chamber 11 increases, and the fuel pressure in the pressurizing chamber 11 decreases. As a result, the fluid differential pressure (hereinafter, referred to as a "fluid differential pressure before and after the valve part 339") between the suction port 335a and the pressurizing chamber 11 decreases. When the biasing force of the anchor sleeve biasing spring 326 becomes larger than the fluid differential pressure before and after the valve part 339, the movable portion 320 or 330 moves in the valve opening direction. As a result, as illustrated in Fig. 6, the valve part 339 is separated from the seating surface 335b of the suction valve seat 331 to open the fuel introduction opening. As a result, the electromagnetic suction valve 3 enters the open state.

When the electromagnetic suction valve 3 enters the open state, the fuel in the suction port 335a passes between the valve part 339 and the suction valve seat 331, passes through the plurality of fuel passage holes 341b of the stopper 34, and flows into the pressurizing chamber 11. In the open state of the electromagnetic suction valve 3, since the valve part 339 comes into contact with the stopper 34, the position of the valve part 339 in the valve opening direction is restricted. A gap existing between the valve part 339 and the suction valve seat 331 in the open state of the electromagnetic suction valve 3 is a movable range of the valve part 339 and this is a valve opening stroke.

After the suction stroke is completed, the process proceeds to the up-stroke. At this time, the electromagnetic coil 312 remains in an unenergized state, and no magnetic attraction force acts between the anchor 324 and the magnetic core 323. Then, a biasing force in the valve opening direction which corresponds to a difference in biasing force between the anchor sleeve biasing spring 326 and the suction valve biasing spring 334, and a pressing force in the valve closing direction by a fluid force generated when the fuel flows back from the pressurizing chamber 11 to the low-pressure fuel flow path 10a act on the valve member 332 (movable portion 330).

In this state, in order to maintain the electromagnetic suction valve 3 in the open state, the difference in the biasing force between the anchor sleeve biasing spring 326 and the suction valve biasing spring 334 is set to be larger than the fluid force. The volume of the pressurizing chamber 11 decreases as the plunger 2 ascends. Therefore, the fuel suctioned into the pressurizing chamber 11 passes between the valve part 339 and the suction valve seat 331 again and is returned to the suction port 335a, and the pressure in the pressurizing chamber 11 does not increase. This stroke is referred to as a return stroke.

In the return process, when a control signal from the ECU 101 (refer to Fig. 1) is applied to the electromagnetic suction valve 3, a current flows through the electromagnetic coil 312 via the terminal member 313. When a current flows through the electromagnetic coil 312, a magnetic attractive force acts between the magnetic core 323 and the anchor 324, and the anchor 324 (movable portion 320) is attracted to the magnetic core 323. As a result, the anchor 324 (movable portion 320) moves in the valve closing direction (direction away from the valve member 332) against the biasing force by the anchor sleeve biasing spring 326.

A clearance between the anchor 324 and the magnetic core 323 is set to be larger than a valve opening stroke between the valve part 339 and the suction valve seat 331. For example, when the clearance between the anchor 324 and the magnetic core 323 is made smaller than the valve opening stroke, the anchor 324 comes into contact with the magnetic core 323 before the valve part 339 comes into contact with the suction valve seat 331. As a result, since the valve part 339 and the suction valve seat 331 do not come into contact with each other, the electromagnetic suction valve 3 cannot be brought into the close state.

On the other hand, when the clearance between the anchor 324 and the magnetic core 323 is too large, since a sufficient magnetic attractive force cannot be obtained even though the electromagnetic coil 312 is energized, the electromagnetic suction valve 3 cannot be brought into the close state. In addition, even though the electromagnetic suction valve 3 can enter the close state, since responsiveness of the electromagnetic suction valve 3 deteriorates, the amount of fuel discharged at high pressure cannot be controlled during high-speed operation of the internal combustion engine (during high-speed rotation of the cam). Therefore, the clearance between the anchor 324 and the magnetic core 323 is appropriately set in correspondence with the number of windings of the electromagnetic coil 312, the magnitude of the current flowing through the electromagnetic coil 312, and the like.

When the anchor 324 (movable portion 320) moves in the valve closing direction, the valve member 332 (movable portion 330) is released from the biasing force in the valve opening direction, and moves in the valve closing direction by the biasing force of the suction valve biasing spring 334 and the fluid force caused by the fuel flowing into the suction passage 10b. As illustrated in Fig. 7, the valve part seat surface 339a of the valve part 339 comes into contact with the seating surface 335b of the suction valve seat 331 (the valve part 339 is seated on the seating surface 335b). As a result, the electromagnetic suction valve 3 enters the close state.

After the electromagnetic suction valve 3 enters the close state, the fuel in the pressurizing chamber 11 is pressurized as the plunger 2 ascends. Then, when the fuel in the pressurizing chamber 11 reaches or exceeds a predetermined pressure, the fuel passes through the discharge valve 8 and is discharged to the common rail 106 (refer to Fig. 1). This stroke is referred to as a discharge stroke. That is, the up-stroke from the lower start point to the upper start point of the plunger 2 includes the return stroke and the discharge stroke. Then, the amount of high-pressure fuel to be discharged can be controlled by controlling the timing of energizing the electromagnetic coil 312 of the electromagnetic suction valve 3.

When the timing of energizing the electromagnetic coil 312 is made earlier, the ratio of the return stroke during the up-stroke becomes smaller, and the ratio of the discharge stroke becomes larger. As a result, a small amount of fuel is returned to the suction passage 10b, and a large amount of fuel is discharged at a high pressure. On the other hand, when the timing of energizing the electromagnetic coil 312 is delayed, the ratio of the return stroke during the up-stroke becomes larger, and the ratio of the discharge stroke becomes smaller. As a result, a large amount of fuel is returned to the suction passage 10b, and a small amount of fuel is discharged at a high pressure. As described above, the amount of fuel discharged at high pressure can be controlled to an amount required by the engine (internal combustion engine) by controlling the timing of energizing the electromagnetic coil 312.

### [Configuration of Stopper of Electromagnetic suction valve]

Next, a detailed configuration of the stopper 34 of the electromagnetic suction valve 3 described above will be described with reference to Figs. 5, 6, and 8.

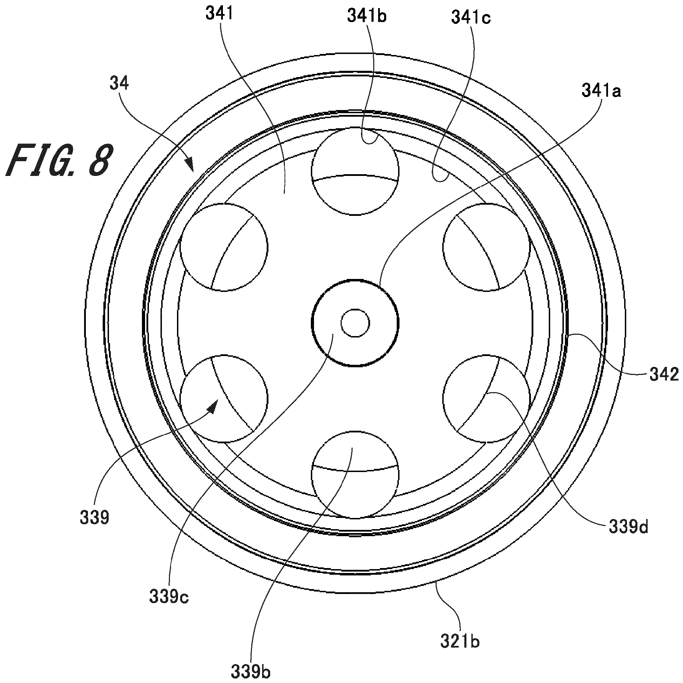

Fig. 8 is a view when the electromagnetic suction valve 3 in the high-pressure fuel supply pump 100 according to the first embodiment of the invention is viewed from the pressurizing chamber 11 side.

The stopper 34 is formed in a bottomed cylindrical shape. The stopper 34 includes the bottom section 341 consisting of a circular plate body and a cylindrical side wall section 342. When the electromagnetic suction valve 3 is in the open state (refer to Fig. 6), the contact surface 339b of the valve part 339 comes into contact with the bottom section 341. The side wall section 342 faces a side circumferential surface of the valve part 339. The bottom section 341 includes the engagement hole 341a, the plurality of fuel passage holes 341b, and a concave portion 341c.

As shown in Fig. 8, each of the plurality of fuel passage holes 341b is formed in a circular shape. A part of each fuel passage hole 341b overlaps the contact surface 339b of the valve part 339 in the valve opening and closing direction (refer to Fig. 5). In addition, the center of each fuel passage hole 341b does not overlap an outer peripheral edge 339d of the valve part 339.

An area of a portion of the fuel passage hole 341b which overlaps the contact surface 339b is smaller than an area of a portion of the fuel passage hole 341b which does not overlap the contact surface 339b. As a result, it is possible to reduce the fluid force of the fuel applied to the contact surface 339b of the valve part 339 through the plurality of fuel passage holes 341b from the pressurizing chamber 11 side. As a result, in a case where the electromagnetic coil 312 (refer to Fig. 6) is in the unenergized state, the electromagnetic suction valve 3 can be prevented from being closed by the fluid force of the fuel.

Further, a part of the portion of the fuel passage hole 341b which does not overlap the contact surface 339b overlaps the side wall section 342. Therefore, a part of the portion of the fuel passage hole 341b which does not overlap the contact surface 339b is formed by scraping off the side wall section 342 (refer to Fig. 5). As a result, it is possible to suppress an increase in an outer diameter of the bottom section 341 (stopper 34) and to increase a diameter of the fuel passage hole 341b. As a result, the area of the portion of the fuel passage hole 341b which overlaps the contact surface 339b can be made smaller than the area of the portion of the fuel passage hole 341b which does not overlap the contact surface 339b without increasing the outer diameter of the stopper 34. Then, the electromagnetic suction valve 3 can be prevented from entering the close state at an unintended timing and the fuel can be prevented from being discharged from the high-pressure fuel supply pump 100. That is, controllability of the discharge flow rate of the fuel by the high-pressure fuel supply pump 100 can be improved.

When the outer diameter of the stopper 34 is increased, the area of the bottom section 341 in contact with the fuel having a high pressure on the pressurizing chamber 11 side is increased. As a result, the force with which the stopper 34 presses the housing 321 in a direction away from the body 1 via the suction valve seat 331 (refer to Fig. 6) increases. As a result, the force applied to the welding portion between the housing 321 and the body 1 may exceed an allowable value, and the housing 321 may be detached from the body 1. Therefore, it is preferable to suppress an increase in the outer diameter of the stopper 34.

In addition, since a part of the portion of the fuel passage hole 341b which does not overlap the contact surface 339b is formed by scraping off the side wall section 342, it is not necessary to reduce the thickness of the entirety of the side wall section 342. As a result, the rigidity of the side wall section 342 can be secured, and the diameter of the fuel passage hole 341b can be increased. As a result, buckling of the stopper 34 can be prevented when the suction valve seat 331 is press-fitted and fixed to the body 1.

The outer surface of the bottom section 341 faces the pressurizing chamber 11. The concave portion 341c is provided in the outer surface of the bottom section 341. The concave portion 341c forms a step with an outer edge portion of the bottom section 341. As illustrated in Fig. 8, the concave portion 341c is formed in a circular shape concentric with the outer diameter of the bottom section 341. As a result, it is possible to expand a space through which the fuel passes when the fuel flows back from the pressurizing chamber 11 side to the suction port 335a side. As a result, the fuel passage at the time of flowing-back can be sufficiently secured, and the fluid force of the fuel applied to the valve part 339 can be reduced.

In addition, the plurality of fuel passage holes 341b are formed across the concave portion 341c and the outer edge portion of the bottom section 341. As a result, the fuel can travel from the fuel passage secured by providing the concave portion 341c to the plurality of fuel passage holes 341b.

### 2. Second Embodiment

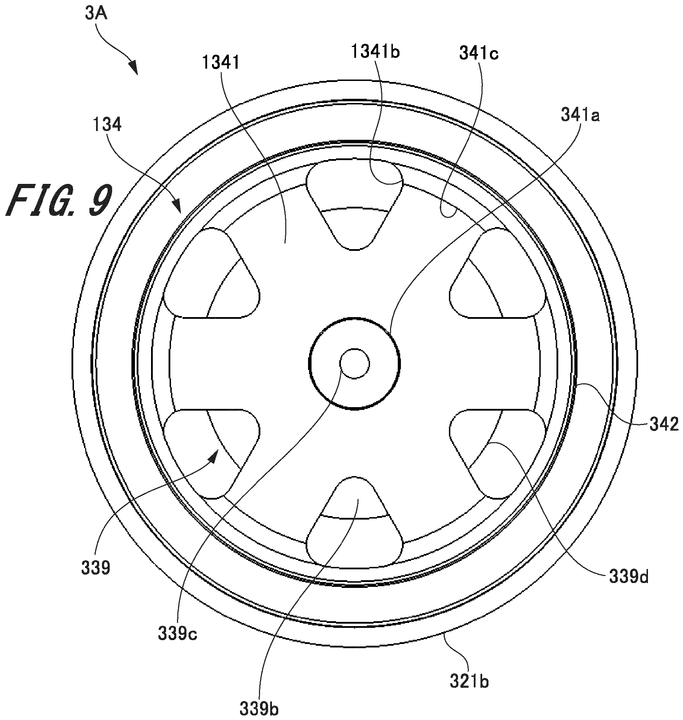

Next, a high-pressure fuel supply pump according to a second embodiment of the invention will be described with reference to Fig. 9.

Fig. 9 is a view when an electromagnetic suction valve 3A in a high-pressure fuel supply pump according to the second embodiment of the invention is viewed from the pressurizing chamber 11 side.

The high-pressure fuel supply pump according to the second embodiment has the same configuration as the high-pressure fuel supply pump 100 according to the first embodiment described above. The high-pressure fuel supply pump according to the second embodiment is different from the high-pressure fuel supply pump 100 in a stopper 134 of the electromagnetic suction valve 3A. Here, the stopper 134 will be described, and the description of the configuration common to the high-pressure fuel supply pump 100 will be omitted.

The stopper 134 shown in Fig. 9 is formed in a bottomed cylindrical shape. The stopper 134 includes a bottom section 1341 consisting of a circular plate body and a cylindrical side wall section 342. The side wall section 342 is the same as in the first embodiment. When the electromagnetic suction valve 3A is in the open state, the contact surface 339b of the valve part 339 comes into contact with the bottom section 1341. The bottom section 1341 includes an engagement hole 341a, a plurality of fuel passage holes 1341b, and a concave portion 341c. The engagement hole 341a and the concave portion 341c are the same as in the first embodiment.

Each of the plurality of fuel passage holes 1341b is formed in an approximately triangular shape. That is, the fuel passage hole according to the invention is not limited to the circular shape as in the first embodiment, and may be approximately the triangular shape as in the fuel passage hole 1341b, and the shape can be appropriately set. A part of the fuel passage hole 1341b overlaps the contact surface 339b of the valve part 339 in the valve opening and closing direction (refer to Fig. 5).

An area of the portion of the fuel passage hole 1341b which overlaps the contact surface 339b is smaller than an area of a portion of the fuel passage hole 1341b which does not overlap the contact surface 339b. According to this, it is possible to reduce the fluid force of the fuel applied to the contact surface 339b of the valve part 339 through the plurality of fuel passage holes 1341b from the pressurizing chamber 11 side. As a result, in a case where the electromagnetic coil 312 (refer to Fig. 6) is in the unenergized state, the electromagnetic suction valve 3A can be prevented from being closed by the fluid force of the fuel. Then, the electromagnetic suction valve 3A can be prevented from entering the close state at an unintended timing and the fuel can be prevented from being discharged from the high-pressure fuel supply pump. That is, controllability of the discharge flow rate of the fuel by the high-pressure fuel supply pump can be improved.

In addition, a part of the portion of the fuel passage hole 1341b which does not overlap the contact surface 339b overlaps the side wall section 342. Therefore, a part of the portion of the fuel passage hole 1341b which does not overlap the contact surface 339b is formed by scraping off the side wall section 342. As a result, it is possible to suppress an increase in an outer diameter of the bottom section 1341 (stopper 134) and to increase a diameter of the fuel passage hole 1341b. As a result, the area of the portion of the fuel passage hole 1341b which overlaps the contact surface 339b can be made smaller than the area of the portion of the fuel passage hole 1341b which does not overlap the contact surface 339b without increasing the outer diameter of the stopper 134.

In addition, since the portion of the fuel passage hole 1341b which does not overlap the contact surface 339b is formed by scraping off the side wall section 342, it is not necessary to reduce the thickness of the entirety of the side wall section 342. As a result, the rigidity of the side wall section 342 can be secured, and the fuel passage hole 1341b can be enlarged. As a result, buckling of the stopper 134 can be prevented when the suction valve seat 331 is press-fitted and fixed to the body 1.

As described above, the electromagnetic suction valve 3 according to the first embodiment is in the open state when not energized. The electromagnetic suction valve 3 includes the valve part 339 that opens and closes the fuel introduction opening, the bottom section 341 that comes into contact with the valve part 339 in the open state in which the valve part 339 has opened the fuel introduction opening, and the stopper 34 including the side wall section 342 facing the side circumferential surface of the valve part 339. The bottom section 341 of the stopper 34 includes the plurality of fuel passage holes 341b. In a direction in which the valve part 339 and the bottom section 341 of the stopper 34 face each other, in the plurality of fuel passage holes 341b, an area of a portion that does not overlap the valve part 339 is greater than an area of a portion that overlaps the valve part 339. As a result, the fluid force of the fuel applied to the valve part 339 through the plurality of fuel passage holes 341b can be reduced. As a result, in a case where the electromagnetic coil 312 is in the unenergized state, the electromagnetic suction valve 3 can be prevented from being closed by the fluid force of the fuel.

In addition, in the electromagnetic suction valve 3A according to the second embodiment, in a direction in which the valve part 339 and the bottom section 1341 of the stopper 134 face each other, in the portion of the plurality of fuel passage holes 1341b, an area of a portion that does not overlap the valve part 339 is greater than an area of a portion that overlaps the valve part 339. Therefore, the electromagnetic suction valve 3A can be prevented from being closed by the fluid force of the fuel.

In addition, in a direction in which the valve part 339 and the bottom section 341 of the stopper 34 face each other, at least a part of each of the fuel passage holes 341b overlaps the valve part 339, and the center of each fuel passage hole 341b does not overlap the outer peripheral edge of the valve part 339. As a result, in the plurality of fuel passage holes 341b, the area of the portion that does not overlap the valve part 339 is greater than the area of the portion that overlaps the valve part 339. Therefore, the electromagnetic suction valve 3 can be prevented from being closed by the fluid force of the fuel.

In the side wall section 342 of the stopper 34, a portion that overlaps the plurality of fuel passage holes 341b is scraped off in a direction in which the valve part 339 and the bottom section 341 of the stopper 34 face each other. As a result, the rigidity of the side wall section 342 can be secured, and the fuel passage hole 341b can be enlarged. As a result, when the electromagnetic suction valve 3 is assembled to the body 1, buckling of the stopper 34 can be prevented.

The bottom section 341 of the stopper 34 includes the concave portion 341c on a surface opposite to a surface facing the valve part 339. The concave portion 341c forms a step with the outer edge portion of the bottom section 341. As a result, it is possible to expand the space through which the fuel passes at the time of flowing-back in which the fuel passes through the stopper 34 and flows toward the valve part 339. As a result, the fuel passage at the time of flowing-back can be sufficiently secured, and the fluid force of the fuel applied to the valve part 339 can be reduced.

The plurality of fuel passage holes 341b are formed across the concave portion 341c and the outer edge portion of the bottom section 341. As a result, the fuel can travel from the fuel passage secured by providing the concave portion 341c to the plurality of fuel passage holes 341b.

The invention is not limited to the embodiments described above and illustrated in the drawings, and various modifications can be made without departing from the gist of the invention described in the appended claims.

In addition, the above-described embodiments have been described in detail for easy understanding of the invention, and are not necessarily limited to those including all of the described configurations. Further, a part of the configuration of one embodiment can be replaced with the configuration of another embodiment, and the configuration of another embodiment can be added to the configuration of one embodiment. In addition, it is possible to add, delete, and replace other configurations for a part of the configuration of each embodiment.

### Reference Signs List

- 1: Body
- 1a: Suction passage
- 1b: Flange
- 1c: Fixing portion
- 2: Plunger
- 3, 3A: Electromagnetic suction valve
- 4: Relief valve mechanism
- 5: Suction joint
- 6: Cylinder
- 8: Discharge valve
- 9: Pressure pulsation reduction mechanism
- 10: Low-pressure fuel chamber
- 11: Pressurizing chamber
- 12: Discharge joint
- 31: Coil unit
- 32: Anchor unit
- 33: Valve body unit
- 34, 134: Stopper
- 100: High-pressure fuel supply pump
- 311: Base member
- 312: Electromagnetic coil
- 313: Terminal member
- 315: Bobbin
- 316: Fitting hole
- 320: Movable portion
- 321: Housing
- 321a: Housing body
- 321b: Joining convex portion
- 322: Anchor guide
- 322a: Large-diameter portion
- 322b: Small-diameter portion
- 323: Magnetic core
- 324: Anchor
- 325: Anchor sleeve
- 328: Fixed cylindrical portion
- 329: Contact portion
- 329a: Through-hole
- 330: Movable portion
- 331: Suction valve seat
- 332: Valve member
- 333: Spring holder
- 335: Large-diameter seat portion
- 335a: Suction port
- 335b: Seating surface
- 336: Small-diameter seat portion
- 337: Inner peripheral guide portion
- 338: Rod portion
- 339: Valve part
- 339a: Valve part seat surface
- 339b: Contact surface
- 339c: Engagement protrusion
- 339d: Outer peripheral edge
- 341, 1341: Bottom section
- 341a: Engagement hole
- 341b, 1341b: Fuel passage hole
- 341c: Concave portion
- 342: Side wall section

## Claims

1. An electromagnetic suction valve that is in an open state when not energized, comprising:
a valve part that opens and closes a fuel introduction opening; and
a stopper including a bottom section that comes into contact with the valve part in the open state in which the valve part opens the fuel introduction opening, and a side wall section facing a side circumferential surface of the valve part,
wherein the bottom section of the stopper includes a plurality of fuel passage holes, and
in a direction in which the valve part and the bottom section of the stopper face each other, in the plurality of fuel passage holes, an area of a portion that does not overlap the valve part is greater than an area of a portion that overlaps the valve part.

2. An electromagnetic suction valve that is in an open state when not energized, comprising:
a valve part that opens and closes a fuel introduction opening; and
a stopper including a bottom section that comes into contact with the valve part in the open state in which the valve part opens the fuel introduction opening, and a side wall section facing a side circumferential surface of the valve part,
wherein the bottom section of the stopper includes a plurality of fuel passage holes, and
in a direction in which the valve part and the bottom section of the stopper face each other, at least a part of each of the plurality of fuel passage holes overlaps the valve part, and the center of the each fuel passage hole does not overlap an outer peripheral edge of the valve part.

3. The electromagnetic suction valve according to claim 1 or 2,
wherein a portion of the side wall section of the stopper which overlaps the plurality of fuel passage holes is scraped off in a direction in which the valve part and the bottom section of the stopper face each other.

4. The electromagnetic suction valve according to claim 1 or 2,
wherein the bottom section of the stopper includes a concave portion in a surface opposite to a surface facing the valve part, and
the concave portion forms a step with an outer edge portion of the bottom section.

5. The electromagnetic suction valve according to claim 4,
wherein the plurality of fuel passage holes are formed across the concave portion and the outer edge portion.

6. A fuel supply pump, comprising:
a body including a pressurizing chamber;
a plunger that is supported to the body in a reciprocating possible manner and increases or decreases a capacity of the pressurizing chamber by a reciprocating motion; and
an electromagnetic suction valve that discharges fuel to the pressurizing chamber,
wherein the electromagnetic suction valve is in an open state when not energized, and includes
a valve part that opens and closes a fuel introduction opening, and
a stopper including a bottom section that comes into contact with the valve part in the open state in which the valve part opens the fuel introduction opening, and a side wall section facing a side circumferential surface of the valve part,
the bottom section of the stopper includes a plurality of fuel passage holes, and
in a direction in which the valve part and the bottom section of the stopper face each other, in the plurality of fuel passage holes, an area of a portion that does not overlap the valve part is greater than an area of a portion that overlaps the valve part.

7. A fuel supply pump, comprising:
a body including a pressurizing chamber;
a plunger that is supported to the body in a reciprocating possible manner and increases or decreases a capacity of the pressurizing chamber by a reciprocating motion; and
an electromagnetic suction valve that discharges fuel to the pressurizing chamber,
wherein the electromagnetic suction valve is in an open state when not energized, and includes
a valve part that opens and closes a fuel introduction opening, and
a stopper including a bottom section that comes into contact with the valve part in the open state in which the valve part opens the fuel introduction opening, and a side wall section facing a side circumferential surface of the valve part,
the bottom section of the stopper includes a plurality of fuel passage holes, and
in a direction in which the valve part and the bottom section of the stopper face each other, at least a part of each of the plurality of fuel passage holes overlaps the valve part, and the center of the each fuel passage hole does not overlap an outer peripheral edge of the valve part.
